# EUROPÄISCHE PATENTSCHRIFT

(11) **EP 3 529 789 B1**
(45) Veröffentlichungstag und Bekanntmachung des Hinweises auf die Patenterteilung: **07.10.2020**
(21) Anmeldenummer: 17754305.5
(22) Anmeldetag: 08.08.2017
(51) Int. Cl.: G08B 25/01, G08B 29/18, G08G 1/00

(54) **VERFAHREN UND VORRICHTUNG ZUM GENERIEREN EINES NOTRUFS FÜR EIN FAHRZEUG**
METHOD AND DEVICE FOR GENERATING AN EMERGENCY CALL FOR A VEHICLE
PROCÉDÉ ET DISPOSITIF POUR GÉNÉRER UN APPEL D'URGENCE POUR VÉHICULE

(30) Priorität: 19.10.2016 DE 102016220479
(43) Veröffentlichungstag der Anmeldung: 28.08.2019
(73) Patentinhaber: Robert Bosch GmbH, 70442 Stuttgart (DE)
(72) Erfinder: KLEIN, Martin, 74336 Brackenheim (DE)
(86) Internationale Anmeldenummer: PCT/EP2017/070081
(87) Internationale Veröffentlichungsnummer: WO 2018/072910

(56) Entgegenhaltungen:
- DE-A1-102013 214 383
- DE-A1-102015 011 516
- DE-A1-102015 013 842

## Beschreibung

### Stand der Technik

Die Erfindung geht aus von einer Vorrichtung oder einem Verfahren nach Gattung der unabhängigen Ansprüche.

Es ist beispielsweise vorgesehen, dass europaweit verpflichtend sogenannte eCall-Notrufsysteme in neuen Fahrzeugen installiert werden sollen. Solche Notrufsysteme können insbesondere automatisch ab einer gewissen Unfallschwere einen Notruf absetzen.

Die DE 10 2013 005 824 A1 offenbart ein Notrufsystem für ein Fahrzeug, wobei zwei Notrufsendevorrichtungen zum Absetzen von zwei Notrufen an zwei Empfangsstationen über ein Mobilfunknetz und mittels Nahbereichs-Kommunikationstechnik. Aus der DE 10 2015 011516 (A1) ist ein weiteres Verfahren zum Generieren eines Notrufs für ein Fahrzeug bekannt, bei dem neben der Position des Fahrzeugs noch weitere Daten über Art und Schwere des Unfalls übermittelt werden.

### Offenbarung der Erfindung

Vor diesem Hintergrund werden mit dem hier vorgestellten Ansatz ein Verfahren zum Generieren eines Notrufs für ein Fahrzeug, eine entsprechende Vorrichtung sowie ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen können insbesondere hinsichtlich eines automatischen oder automatisierten Notrufs für ein Fahrzeug bei einer Kollision auch erfasste Informationen über ein Umfeld des Fahrzeugs berücksichtigt und verwendet werden. Somit kann beispielsweise ein solcher Notruf nicht nur Informationen über das Fahrzeug selbst, sondern auch über Kollisionspartner, Kollisionsgegner oder dergleichen beinhalten. Anders ausgedrückt können insbesondere Umfeldsensordaten eines Fahrzeugs ausgewertet und bei mit einem solchen Notruf übermittelten Informationen berücksichtigt werden.

Vorteilhafterweise kann gemäß Ausführungsformen beispielsweise eine Aufwertung einer sogenannten eCall-Funktionalität durch Informationen von zumindest einem Umfeldsensor des Fahrzeugs erreicht werden. Durch eine solche Berücksichtigung von Daten zumindest eines Umfeldsensors für einen automatischen Fahrzeugnotruf bzw. ein eCall-System kann ein zuverlässiger, genauer, treffsicherer und bedarfsgerechter Notruf abgesetzt werden. Hierbei kann eine Einleitung von Notfallmaßnahmen frühzeitig und bedarfsgerecht ermöglicht werden.

Es wird ein Verfahren zum Generieren eines Notrufs für ein Fahrzeug vorgestellt, wobei das Verfahren zumindest folgende Schritte aufweist:
Einlesen eines Kollisionssignals von einer Schnittstelle zu mindestens einem Kollisionssensor des Fahrzeugs und eines Umfeldsensorsignals von einer Schnittstelle zu mindestens einem Umfeldsensor des Fahrzeugs, wobei das Kollisionssignal zumindest eine Kollisionscharakteristik einer Kollision des Fahrzeugs mit zumindest einem Kollisionsobjekt repräsentiert, wobei das Umfeldsensorsignal ein das zumindest eine Kollisionsobjekt aufweisendes Umfeld des Fahrzeugs repräsentiert;
Ermitteln zumindest einer Objekteigenschaft des zumindest einen Kollisionsobjekts unter Verwendung des Umfeldsensorsignals;
Erzeugen eines Notrufsignals unter Verwendung der zumindest einen Kollisionscharakteristik und der zumindest einen Objekteigenschaft; und
Bereitstellen des Notrufsignals zur Ausgabe an eine Übertragungseinrichtung des Fahrzeugs.

Dieses Verfahren kann beispielsweise in Software oder Hardware oder in einer Mischform aus Software und Hardware beispielsweise in einem Steuergerät implementiert sein. Der mindestens eine Kollisionssensor kann als ein Beschleunigungssensor, ein Drucksensor oder dergleichen ausgeführt sein. Die zumindest eine Kollisionscharakteristik kann einen Aufprall des Fahrzeugs auf das zumindest eine Kollisionsobjekt, eine Relativgeschwindigkeit zwischen dem Fahrzeug und dem zumindest einen Kollisionsobjekt, eine Geschwindigkeit des Fahrzeugs, einen Kollisionswinkel relativ zu dem Fahrzeug, einen Auftreffbereich des zumindest einen Kollisionsobjekts auf dem Fahrzeug und zusätzlich oder alternativ mindestens eine weitere Kollisionscharakteristik repräsentieren. Das zumindest eine Kollisionsobjekt kann ein Fremdfahrzeug, ein Fußgänger oder ein stationäres Objekt oder Hindernis sein. Die Übertragungseinrichtung kann ausgebildet sein, um das Notrufsignal über eine Funkschnittstelle oder dergleichen drahtlos an zumindest eine Einrichtung außerhalb des Fahrzeugs zu übertragen. Bei dem Verfahren kann ferner auf eine Anforderung eines Notrufs reagiert oder unter Verwendung des Kollisionssignals über eine Notwendigkeit eines Notrufs entschieden werden.

Gemäß einer Ausführungsform kann im Schritt des Erzeugens ein Notrufsignal erzeugt werden, das von der zumindest einen Kollisionscharakteristik und zusätzlich oder alternativ von der zumindest einen Objekteigenschaft abhängige Notfalldaten repräsentiert. Die Notfalldaten können eine Alarmierung von Rettungskräften ermöglichen. Hierbei können die Notfalldaten auch von der zumindest einen Objekteigenschaft des zumindest einen Kollisionsobjekts abhängig sein. Eine solche Ausführungsform bietet den Vorteil, dass ein zuverlässiger und situationsgerechter Notruf generiert werden kann, dessen Notfalldaten sich je nach Kollisionsobjekt unterscheiden können.

Auch kann im Schritt des Erzeugens ein Notrufsignal erzeugt werden, das einen Schätzwert für eine Anzahl von durch die Kollision verletzten Personen, einen Schätzwert für einen Verletzungsgrad von durch die Kollision verletzten Personen, einen Schätzwert für einen Schaden an dem Fahrzeug und zusätzlich oder alternativ einen Schätzwert für einen Schaden an dem zumindest einen Kollisionsobjekt als Notfalldaten repräsentiert. Hierbei können im Schritt des Ermittelns eine geschätzte und zusätzlich oder alternativ maximale Belegung des zumindest einen Kollisionsobjektes mit Personen und zusätzlich oder alternativ ein Schaden an dem zumindest einen Kollisionsobjekt als die zumindest eine Objekteigenschaft ermittelt worden sein. Eine solche Ausführungsform bietet den Vorteil, dass eine Einleitung für die Folgen der Kollision passender Notfallmaßnahmen beschleunigt werden kann.

Ferner kann im Schritt des Einlesens als Umfeldsensorsignal zumindest ein Bildsignal von einer Schnittstelle zu einer Fahrzeugkamera des Fahrzeugs eingelesen werden. Hierbei kann im Schritt des Ermittelns die zumindest eine Objekteigenschaft als eine optisch erkennbare Objekteigenschaft unter Verwendung des Bildsignals ermittelt werden. Optional können im Schritt des Einlesens auch Fahrzeugsensordaten von einer Schnittstelle zu mindestens einem Fahrzeugsensor eingelesen und bei nachfolgenden Verfahrensschritten berücksichtigt werden, wie beispielsweise Informationen über eine Sitzbelegung in dem Fahrzeug oder dergleichen. Eine solche Ausführungsform bietet den Vorteil, dass Bilddaten des Umfeldes zuverlässig und genau analysiert und daraus gewonnene Rückschlüsse für den Notruf berücksichtigt werden können.

Zudem kann im Schritt des Ermittelns das zumindest eine Kollisionsobjekt klassifiziert werden, um eine Objektklasse als Objekteigenschaft zu ermitteln. Beispielsweise kann die Objektklasse ein Fremdfahrzeug, einen Typ eines Fremdfahrzeugs, einen Fußgänger oder ein Hindernis repräsentieren. Eine solche Ausführungsform bietet den Vorteil, dass schnell und zuverlässig Informationen über das zumindest eine Kollisionsobjekt gewonnen werden können.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung eines Notrufsystems des Fahrzeugs. Hierzu kann die Vorrichtung beispielsweise auf Sensorsignale wie Kollisionssignale und Umfeldsensorsignale zugreifen. Es kann mittels des Notrufsignals eine Ansteuerung einer Übertragungseinrichtung zum Übertragen des Notrufsignals erfolgen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung einer Vorrichtung gemäß einem Ausführungsbeispiel in einem Fahrzeug bei einer Kollision; und
Fig. 2 ein Ablaufdiagramm eines Verfahrens zum Generieren gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

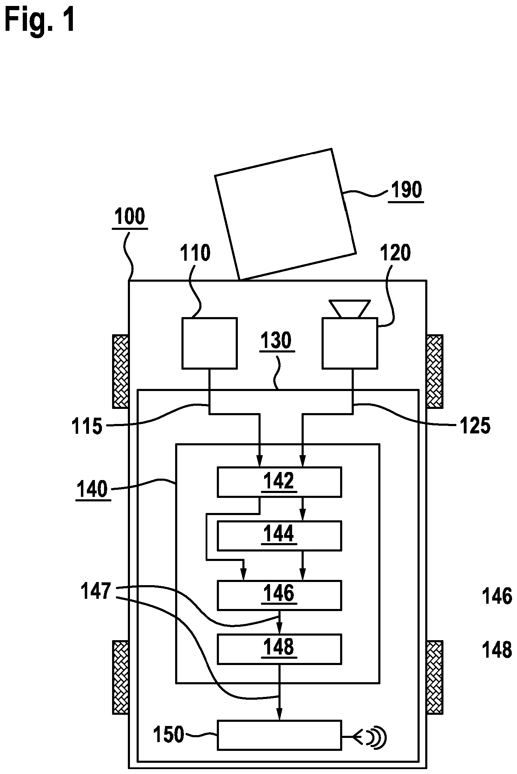

Fig. 1 zeigt eine schematische Darstellung einer Vorrichtung 140 gemäß einem Ausführungsbeispiel in einem Fahrzeug 100 bei einer Kollision. Bei dem Fahrzeug 100 handelt es sich um ein Kraftfahrzeug, insbesondere ein Landfahrzeug bzw. Straßenfahrzeug, beispielsweise einen Personenkraftwagen oder ein Nutzfahrzeug. Zwischen dem Fahrzeug 100 und beispielhaft lediglich einem Kollisionsobjekt 190 ist eine Kollision aufgetreten. Bei dem Kollisionsobjekt 190 handelt es sich beispielsweise um ein Fremdfahrzeug, einen Fahrradfahrer, einen Fußgänger, ein stationäres Hindernis oder dergleichen. Die Vorrichtung 140 ist ausgebildet, um einen Notruf für das Fahrzeug 100 zu generieren. Dabei ist die Vorrichtung 140 ausgebildet, um ansprechend auf die Kollision einen Notruf für das Fahrzeug 100 zu generieren.

Von dem Fahrzeug 100 sind lediglich beispielhaft ein Kollisionssensor 110 ein Umfeldsensor 120, beispielsweise in Gestalt einer Fahrzeugkamera 120, und ein Notrufsystem 130 mit der Vorrichtung 140 gezeigt. Das Notrufsystem 130 weist die Vorrichtung 140 zum Generieren und eine Übertragungseinrichtung 150 zum Übertragen des generierten Notrufs nach außerhalb des Fahrzeugs 100 auf. Das Notrufsystem 130 und der Kollisionssensor 110 sowie der Umfeldsensor 120 sind signalübertragungsfähig miteinander verbunden.

Der Kollisionssensor 110 ist ausgebildet, um eine Kollision des Fahrzeugs 100 mit dem Kollisionsobjekt 190 zu erfassen. Der Kollisionssensor 110 ist beispielsweise als ein Drucksensor, ein Beschleunigungssensor oder dergleichen ausgeführt. Dabei ist der Kollisionssensor 110 ausgebildet, um ein Kollisionssignal 115 auszugeben oder bereitzustellen, das zumindest eine Kollisionscharakteristik der Kollision des Fahrzeugs 100 mit dem Kollisionsobjekt 190 repräsentiert.

Der Umfeldsensor 120 ist gemäß dem in Fig. 1 dargestellten Ausführungsbeispiel als eine Fahrzeugkamera 120 ausgeführt. Der Umfeldsensor 120 ist ausgebildet, um ein Umfeld des Fahrzeugs 100 zu erfassen. Dabei ist der Umfeldsensor 120 ausgebildet, um ein Umfeldsensorsignal 125 auszugeben oder bereitzustellen, welches ein das zumindest eine Kollisionsobjekt 190 aufweisendes Umfeld des Fahrzeugs 100 repräsentiert.

Die Vorrichtung 140 zum Generieren weist eine Einleseeinrichtung 142, eine Ermittlungseinrichtung 144, eine Erzeugungseinrichtung 146 und eine Bereitstellungseinrichtung 148 auf. Die Vorrichtung 140 ist signalübertragungsfähig mit dem Kollisionssensor 110, dem Umfeldsensor 120 und der Übertragungseinrichtung 150 verbunden.

Die Einleseeinrichtung 142 ist ausgebildet, um das Kollisionssignal 115 von einer Schnittstelle zu dem Kollisionssensor 110 einzulesen. Auch ist die Einleseeinrichtung 142 ausgebildet, um das Umfeldsensorsignal 125 von einer Schnittstelle zu dem Umfeldsensor 120 einzulesen. Ferner ist die Einleseeinrichtung 142 ausgebildet, um das Kollisionssignal 115 an die Erzeugungseinrichtung 146 und das Umfeldsensorsignal 125 an die Ermittlungseinrichtung 144 weiterzuleiten. Gemäß dem in Fig. 1 dargestellten Ausführungsbeispiel ist die Einleseeinrichtung 142 ausgebildet, um als Umfeldsensorsignal 125 zumindest ein Bildsignal von einer Schnittstelle zu dem als Fahrzeugkamera ausgeführten Umfeldsensor 120 einzulesen. Gemäß einem anderen Ausführungsbeispiel kann die Einleseeinrichtung 142 ausgebildet sein, um als Umfeldsensorsignal 125 ein weiteres Signal von mindestens einem weiteren Umfeldsensor einzulesen.

Die Ermittlungseinrichtung 144 ist ausgebildet, um unter Verwendung des Umfeldsensorsignals 125 zumindest eine Objekteigenschaft des Kollisionsobjekts 190 zu ermitteln. Auch ist die Ermittlungseinrichtung 144 ausgebildet, um die zumindest eine ermittelte Objekteigenschaft in Signalform an die Erzeugungseinrichtung 146 weiterzuleiten.

Gemäß dem in Fig. 1 gezeigten Ausführungsbeispiel ist die Ermittlungseinrichtung 144 ausgebildet, um die zumindest eine Objekteigenschaft als eine optisch erkennbare Objekteigenschaft unter Verwendung des Bildsignals zu ermitteln. Zusätzlich oder alternativ ist die Ermittlungseinrichtung 144 ausgebildet, um das Kollisionsobjekt 190 zu klassifizieren, um eine Objektklasse als Objekteigenschaft zu ermitteln.

Die Erzeugungseinrichtung 146 ist ausgebildet, um unter Verwendung der zumindest einen Kollisionscharakteristik aus dem Kollisionssignal 115 und unter Verwendung der zumindest einen Objekteigenschaft, die mittels der Ermittlungseinrichtung 144 ermittelt wurde, ein Notrufsignal 147 zu erzeugen. Das erzeugte Notrufsignal 147 repräsentiert den Notruf für das Fahrzeug 100.

Gemäß einem Ausführungsbeispiel ist die Erzeugungseinrichtung 146 ausgebildet, um ein Notrufsignal 147 zu erzeugen, das von der zumindest einen Kollisionscharakteristik und/oder von der zumindest einen Objekteigenschaft abhängige Notfalldaten repräsentiert. Insbesondere ist die Erzeugungseinrichtung 146 ausgebildet, um ein Notrufsignal 147 zu erzeugen, das einen Schätzwert für eine Anzahl von durch die Kollision verletzten Personen, einen Schätzwert für einen Verletzungsgrad von durch die Kollision verletzten Personen, einen Schätzwert für einen Schaden an dem Fahrzeug 100 und/oder einen Schätzwert für einen Schaden an dem zumindest einen Kollisionsobjekt 190 als Notfalldaten repräsentiert.

Die Bereitstellungseinrichtung 148 ist ausgebildet, um das erzeugte Notrufsignal 147 zur Ausgabe an die Übertragungseinrichtung 150 bereitzustellen. Die Übertragungseinrichtung 150 ist ausgebildet, um das Notrufsignal 147 an mindestens eine Empfangseinrichtung außerhalb des Fahrzeugs 100 zu übertragen. Dabei weist die Übertragungseinrichtung 150 beispielsweise eine Funkschnittstelle oder dergleichen zum Übertragen des Notrufsignals 147 auf.

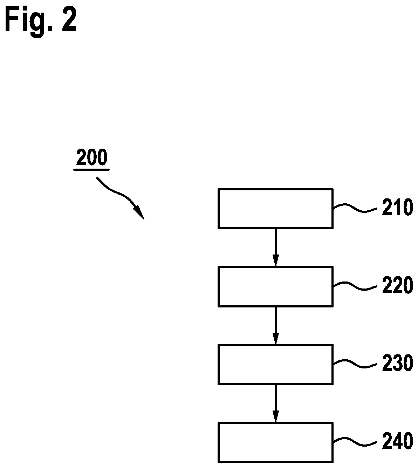

Fig. 2 zeigt ein Ablaufdiagramm eines Verfahrens 200 zum Generieren gemäß einem Ausführungsbeispiel. Das Verfahren 200 ist ausführbar, um einen Notruf für ein Fahrzeug generieren. Dabei ist das Verfahren 200 zum Generieren in Verbindung mit dem Fahrzeug aus Fig. 1 oder einem ähnlichen Fahrzeug, dem Notrufsystem aus Fig. 1 oder einem ähnlichen Notrufsystem und/oder der Vorrichtung aus Fig. 1 oder einer ähnlichen Vorrichtung ausführbar. Das Verfahren 200 zum Generieren ist hierbei mittels der Vorrichtung aus Fig. 1 oder einer ähnlichen Vorrichtung ausführbar.

In einem Schritt 210 des Einlesens werden bei dem Verfahren 200 zum Generieren ein Kollisionssignal von einer Schnittstelle zu mindestens einem Kollisionssensor des Fahrzeugs und ein Umfeldsensorsignal von einer Schnittstelle zu mindestens einem Umfeldsensor des Fahrzeugs eingelesen. Das Kollisionssignal repräsentiert zumindest eine Kollisionscharakteristik einer Kollision des Fahrzeugs mit zumindest einem Kollisionsobjekt. Das Umfeldsensorsignal repräsentiert ein das zumindest eine Kollisionsobjekt aufweisendes Umfeld des Fahrzeugs.

Nachfolgend wird bei dem Verfahren 200 zum Generieren in einem Schritt 220 des Ermittelns unter Verwendung des Umfeldsensorsignals zumindest eine Objekteigenschaft des zumindest einen Kollisionsobjekts ermittelt. Dann wird in einem Schritt 230 des Erzeugens unter Verwendung der zumindest einen Kollisionscharakteristik und der zumindest einen Objekteigenschaft ein Notrufsignal erzeugt. Nachfolgend wird das im Schritt 230 des Erzeugens erzeugte Notrufsignal in einem Schritt 240 des Bereitstellens zur Ausgabe an eine Übertragungseinrichtung des Fahrzeugs bereitgestellt.

Unter Bezugnahme auf die vorstehend genannten und beschriebenen Figuren werden nachfolgend Anwendungsszenarien von Ausführungsbeispielen zusammenfassend und mit anderen Worten kurz erläutert.

Es kann beispielsweise bei einer Kollision bzw. einem Zusammenstoß des Fahrzeugs 100 mit einem Fahrrad oder Fußgänger als Kollisionsobjekt 190 ein Notrufsignal 147 erzeugt und übertragen werden, das Notfalldaten repräsentiert, die eine direkte Alarmierung von beispielsweise zwei Rettungswagen und/oder zwei Notärzten ermöglichen, da aus bekannter Eigengeschwindigkeit des Fahrzeugs 100 und Kenntnis von Objekteigenschaften des Kollisionsobjektes 190 sowie eines Kollisionspunktes von einem Notfallmaßnahmen rechtfertigenden Schaden an dem Kollisionsobjekt 190 ausgegangen werden kann. Analog dazu kann aus dem Kollisionspunkt und einer Relativgeschwindigkeit zwischen dem Fahrzeug 100 und dem Kollisionsobjekt 190 ein möglicher Schaden des Kollisionsobjektes 190 bzw. eines Unfallgegners abgeschätzt werden. Mit dieser Information als Objekteigenschaft kann ein Eintreffen einer angemessenen Anzahl an Rettungskräften am Unfallort beschleunigt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Generieren eines Notrufs für ein Fahrzeug (100), wobei das Verfahren (200) zumindest folgende Schritte aufweist:
Einlesen (210) eines Kollisionssignals (115) von einer Schnittstelle zu mindestens einem Kollisionssensor (110) des Fahrzeugs (100) und eines Umfeldsensorsignals (125) von einer Schnittstelle zu mindestens einem Umfeldsensor (120) des Fahrzeugs (100), wobei das Kollisionssignal (115) zumindest eine Kollisionscharakteristik einer Kollision des Fahrzeugs (100) mit zumindest einem Kollisionsobjekt (190) repräsentiert, wobei das Umfeldsensorsignal (125) ein das zumindest eine Kollisionsobjekt (190) aufweisendes Umfeld des Fahrzeugs (100) repräsentiert;
Ermitteln (220) zumindest einer Objekteigenschaft des zumindest einen Kollisionsobjekts unter Verwendung des Umfeldsensorsignals (125);
Erzeugen (230) eines Notrufsignals (147) unter Verwendung der zumindest einen Kollisionscharakteristik und der zumindest einen Objekteigenschaft; und
Bereitstellen (240) des Notrufsignals (147) zur Ausgabe an eine Übertragungseinrichtung (150) des Fahrzeugs (100).

2. Verfahren (200) gemäß Anspruch 1, bei dem im Schritt (230) des Erzeugens ein Notrufsignal (147) erzeugt wird, das von der zumindest einen Kollisionscharakteristik und/oder von der zumindest einen Objekteigenschaft abhängige Notfalldaten repräsentiert.

3. Verfahren (200) gemäß einem der vorangegangenen Ansprüche, bei dem im Schritt (230) des Erzeugens ein Notrufsignal (147) erzeugt wird, das einen Schätzwert für eine Anzahl von durch die Kollision verletzten Personen, einen Schätzwert für einen Verletzungsgrad von durch die Kollision verletzten Personen, einen Schätzwert für einen Schaden an dem Fahrzeug (100) und/oder einen Schätzwert für einen Schaden an dem zumindest einen Kollisionsobjekt (190) als Notfalldaten repräsentiert.

4. Verfahren (200) gemäß einem der vorangegangenen Ansprüche, bei dem im Schritt (210) des Einlesens als Umfeldsensorsignal (125) zumindest ein Bildsignal (125) von einer Schnittstelle zu einer Fahrzeugkamera (120) des Fahrzeugs (100) eingelesen wird, wobei im Schritt (220) des Ermittelns die zumindest eine Objekteigenschaft als eine optisch erkennbare Objekteigenschaft unter Verwendung des Bildsignals ermittelt wird.

5. Verfahren (200) gemäß einem der vorangegangenen Ansprüche, bei dem im Schritt (220) des Ermittelns das zumindest eine Kollisionsobjekt klassifiziert wird, um eine Objektklasse als Objekteigenschaft zu ermitteln.

6. Vorrichtung (140), die eingerichtet ist, um Schritte des Verfahrens (200) gemäß einem der vorangegangenen Ansprüche in entsprechenden Einheiten (142, 144, 146, 148) auszuführen.

7. Computerprogramm, das dazu eingerichtet ist, das Verfahren (200) gemäß einem der Ansprüche 1 bis 5 auszuführen.

8. Maschinenlesbares Speichermedium, auf dem das Computerprogramm nach Anspruch 7 gespeichert ist.

## Claims

1. Method (200) for generating an emergency call for a vehicle (100), wherein the method (200) has at least the following steps of:
reading in (210) a collision signal (115) from an interface to at least one collision sensor (110) of the vehicle (100) and an environmental sensor signal (125) from an interface to at least one environmental sensor (120) of the vehicle (100), wherein the collision signal (115) represents at least one collision characteristic of a collision between the vehicle (100) and at least one collision object (190), wherein the environmental sensor signal (125) represents an environment of the vehicle (100) having the at least one collision object (190);
determining (220) at least one object property of the at least one collision object using the environmental sensor signal (125);
generating (230) an emergency call signal (147) using the at least one collision characteristic and the at least one object property; and
providing (240) the emergency call signal (147) for output to a transmission device (150) of the vehicle (100) .

2. Method (200) according to Claim 1, in which, in the generating step (230), an emergency call signal (147) is generated and represents emergency data dependent on the at least one collision characteristic and/or the at least one object property.

3. Method (200) according to one of the preceding claims, in which, in the generating step (230), an emergency call signal (147) is generated and represents an estimated value for a number of persons injured by the collision, an estimated value for a degree of injury of persons injured by the collision, an estimated value for damage to the vehicle (100) and/or an estimated value for damage to the at least one collision object (190) as emergency data.

4. Method (200) according to one of the preceding claims, in which, in the reading-in step (210), at least one image signal (125) is read in from an interface to a vehicle camera (120) of the vehicle (100) as an environmental sensor signal (125), wherein, in the determining step (220), the at least one object property is determined as a visually recognizable object property using the image signal.

5. Method (200) according to one of the preceding claims, in which, in the determining step (220), the at least one collision object is classified in order to determine an object class as an object property.

6. Apparatus (140) which is configured to carry out steps of the method (200) according to one of the preceding claims in corresponding units (142, 144, 146, 148).

7. Computer program which is configured to carry out the method (200) according to one of Claims 1 to 5.

8. Machine-readable storage medium on which the computer program according to Claim 7 is stored.

## Revendications

1. Procédé (200) pour générer un appel d'urgence pour véhicule (100), dans lequel le procédé (200) comprend au moins les étapes consistant à :
lire (210) un signal de collision (115) provenant d'une interface avec au moins un capteur de collision (110) du véhicule (100) et un signal de capteur d'environnement (125) provenant d'une interface avec au moins un capteur d'environnement (120) du véhicule (100), dans lequel le signal de collision (115) représente au moins une caractéristique de collision d'une collision du véhicule (100) avec au moins un objet de collision (190), dans lequel le signal de capteur d'environnement (125) représente un environnement du véhicule (100) comportant ledit au moins un objet de collision (190) ;
déterminer (220) au moins une propriété d'objet dudit au moins un objet de collision en utilisant le signal de capteur d'environnement (125) ;
générer (230) un signal d'appel d'urgence (147) en utilisant ladite au moins une caractéristique de collision et ladite au moins une propriété d'objet ; et fournir (240) le signal d'appel d'urgence (147) afin qu'il soit délivré à un dispositif de transmission (150) du véhicule (100).

2. Procédé (200) selon la revendication 1, dans lequel, à l'étape (230) de génération, un signal d'appel d'urgence (147) est généré, lequel représente des données d'urgence dépendant de ladite au moins une caractéristique de collision et/ou de ladite au moins une caractéristique d'objet.

3. Procédé (200) selon l'une des revendications précédentes, dans lequel, à l'étape (230) de génération, un signal d'appel d'urgence (147) est généré, lequel représente en tant que données d'urgence une valeur estimée d'un nombre de personnes blessées par la collision, une valeur estimée d'un degré de blessure des personnes blessées par la collision, une valeur estimée d'un endommagement du véhicule (100) et/ou une valeur estimée d'un endommagement dudit au moins un objet de collision (190).

4. Procédé (200) selon l'une des revendications précédentes, dans lequel, à l'étape (210) de lecture, au moins un signal d'image (125) est lu en tant que signal de capteur d'environnement (125) provenant d'une interface avec une caméra de véhicule (120) du véhicule (100), dans lequel, à l'étape (220) de détermination, ladite au moins une propriété d'objet est déterminée comme étant une propriété d'objet optiquement reconnaissable en utilisant le signal d'image.

5. Procédé (200) selon l'une des revendications précédentes, dans lequel, à l'étape (220) de détermination, ledit au moins un objet de collision est classé afin de déterminer une classe d'objet en tant que propriété d'objet.

6. Dispositif (140) conçu pour mettre en œuvre les étapes du procédé (200) selon l'une des revendications précédentes dans des unités (142, 144, 146, 148) correspondantes.

7. Programme d'ordinateur conçu pour mettre en œuvre le procédé (200) selon l'une des revendications 1 à 5.

8. Support de stockage lisible par machine sur lequel est stocké le programme informatique selon la revendication 7.
